# EUROPÄISCHE PATENTSCHRIFT

(11) **EP 2 830 860 B1**
(45) Veröffentlichungstag und Bekanntmachung des Hinweises auf die Patenterteilung: **04.09.2019**
(21) Anmeldenummer: 12812532.5
(22) Anmeldetag: 21.12.2012
(51) Int. Cl.: B29C 70/46, B29C 70/08, B32B 27/06, B32B 27/10, B32B 3/12, B32B 37/14, B29L 31/60, B32B 37/04, B29C 43/20, B29C 43/52, B29K 105/04, B29K 1/00, B29K 23/00, B29K 105/06, B29K 309/08, B32B 3/04, B29K 101/12, B29K 105/00, B29L 31/30

(54) **SANDWICHVERBUNDBAUTEIL UND HERSTELLUNGSVERFAHREN DAFÜR**
SANDWICH COMPOSITE COMPONENT AND PRODUCTION PROCESS THEREFOR
ÉLÉMENT COMPOSITE EN SANDWICH ET PROCÉDÉ DE FABRICATION CORRESPONDANT

(30) Priorität: 30.03.2012 DE 102012006609
(43) Veröffentlichungstag der Anmeldung: 04.02.2015
(73) Patentinhaber: Daimler AG, 70327 Stuttgart (DE)
(72) Erfinder: STAMP, Benno, 73760 Ostfildern (DE); BLUMENSTOCK, Tobias, 70569 Stuttgart (DE); WITTIG, Roman, 71106 Magstadt (DE)
(74) Vertreter: JENSEN & SON
(86) Internationale Anmeldenummer: PCT/EP2012/005342
(87) Internationale Veröffentlichungsnummer: WO 2013/143569

(56) Entgegenhaltungen:
- DE-A1-102006 058 257
- DE-A1-102008 035 918
- GB-A- 2 041 292
- US-A- 6 065 717

## Beschreibung

Die Erfindung betrifft ein Sandwichbauteil mit einem Wabenkern und Deckschichten sowie ein Herstellungsverfahren für dasselbe.

Im Zuge der Leichtbaustrategie im Kraftfahrzeugbau zur Senkung sowohl des Kraftstoffverbrauchs als auch der Kohlendioxidemissionen kommen zunehmend Bauteile mit Sandwichstruktur zum Einsatz, die ein deutlich verringertes Gewicht gegenüber herkömmlichen Bauteilen aufgrund der geringen Dichte des Materials, das den Kern bildet, und ausreichende Festigkeitswerte durch eine geeignete Decklagenmaterialauswahl bieten können. Weitere Vorteile solcher Sandwichstrukturen liegen in ihren thermischen und akustischen Eigenschaften.

Aus der DE 10 2010 005 456 A1 ist ein Sandwichbauteil aus kostengünstigen Materialien mit verbesserten mechanischen Eigenschaften und/oder verbesserter Oberflächengüte bekannt. Das dort beschriebene Sandwichbauteil umfasst einen Wabenkern aus einem zellulosebasierten Material wie Papier und zumindest eine faserverstärkte thermoplastische Deckschicht. Dabei sind die Stege des Wabenkerns an ihren Anschlussstellen zu der Deckschicht in die thermoplastische Kunststoffmatrix der Deckschicht aufgenommen, wodurch der Verbund des Sandwichbauteils hergestellt wird. Die Herstellung eines solchen Sandwichbauteils erfolgt durch Positionieren der aufeinander angeordneten Sandwichlagen in einem Presswerkzeug, in dem die Anordnung erwärmt wird, wodurch die thermoplastische Matrix unter dem im Presswerkzeug herrschenden Druck zumindest teilweise aufgeschmolzen wird, so dass die Stege des Wabenkerns in die Deckschicht aufgenommen werden.

Aus der EP 0 787 578 A2 ist ebenfalls ein mehrlagiges Bauelement bekannt, das aus einem durch eine Wabenanordnung gebildeten Stützkörper besteht, der mit zumindest einer faserverstärkten thermoplastischen Deckschicht verbunden ist. Zur Herstellung des mehrlagigen Bauelementes wird an dem Stützkörper die Deckschicht aufgebracht, die unter Einwirkung von Druck und/oder Temperatur unter gegebenenfalls räumlicher Verformung mit dem Stützkörper zu dem mehrlagigen Bauelement verbunden wird. Dabei wird auf die Deckschicht eine Folie und/oder ein Vlies aus einem thermoplastischen Kunststoff auf einen zur Deckschicht gehörenden faserförmigen Tragkörper aufgebracht, worauf die Deckschicht mit dem thermoplastischen Kunststoff zumindest soweit erwärmt wird, bis dieser zähflüssig ist. Danach wird die Deckschicht auf den Stützkörper aufgelegt und auf diesem zur Verbindung der Deckschicht mit dem Stützkörper aufgepresst. Unmittelbar anschließend wird die Deckschicht abgekühlt, so dass nach einer ausreichenden Erstarrung das Bauelement aus der Form entnommen werden kann.

In beiden Fällen kann die Deckschicht mit einer Decklage bzw. Dekorschicht nach außen abschließen, die die Sichtoberfläche des Bauteils bildet.

Bei der Verwendung von Wabenkernen mit thermoplastischen Deckschichten kann es jedoch infolge der zur Herstellung des Verbunds zwischen den Lagen erforderlichen Fließfähigkeit des Thermoplasten zu Oberflächenfehlern insbesondere in den Umformzonen, wie beispielsweise der Abzeichnung der Wabenstruktur, kommen. DE102008035918 A1 offenbart ein Sandwichbauteil gemäß dem Oberbegriff des Anspruchs 1.

GB2041292 A offenbart ein Sandwichbauteil.

Ausgehend von diesem Stand der Technik ist es Aufgabe der vorliegenden Erfindung, ein kaschiertes Sandwichbauteil unter Vermeidung der durch den verwendeten Stützkern entstehenden Oberflächenfehler zu schaffen.

Diese Aufgabe wird durch ein Sandwichverbundbauteil mit den Merkmalen des Anspruchs 1 gelöst.

Eine weitere Aufgabe besteht darin, ein kostengünstiges Herstellungsverfahren für ein solches kaschiertes Bauteil zu schaffen.

Diese Aufgabe wird durch ein Verfahren mit den Merkmalen des Anspruchs 4 gelöst.

Weiterbildungen des Sandwichverbundbauteils und des Verfahrens sind in den jeweiligen Unteransprüchen ausgeführt.

Ein erfindungsgemäßes Sandwichbauteil, das eine Wabenkernlage und beidseitig zumindest eine faserverstärkte thermoplastische Deckschicht aufweist, die mittels eines thermoplastischen Materials, bei dem es sich um den Thermoplasten der Deckschicht oder ein zusätzlich eingebrachtes thermoplastisches Material handeln kann, mit der Wabenkernlage verbunden ist, weist auf zumindest einer Seite eine auf der Deckschicht angeordnete Dekorlage auf. Um zu vermeiden, dass sich im Herstellungsprozess entstehende Fehlstellen des Wabenkerns an der Oberfläche durch die Dekorlage abzeichnen, umfasst das Sandwichbauteil wenigstens auf der Sichtseite des Sandwichbauteils zwischen der Deckschicht und der Dekorlage eine Schaumlage, die mit der Deckschicht und der Dekorlage verbunden ist. Die Schaumlage ist dabei besonders bevorzugt unmittelbar und stoffschlüssig mit der Deckschicht und der Dekorlage verbunden. Je nach Anforderungen kann das Sandwichbauteil nur einseitig, nämlich auf der Sichtseite bzw. A-Seite des Bauteils mit einer Dekorlage und der darunter liegenden Schaumlage versehen sein, es kann aber auch auf beiden Seiten mit Dekorlagen ausgestattet sein, von denen eine (die Sichtseite) oder beide durch eine Schaumlage von der Deckschicht getrennt sind.

Die Schaumlage besteht, etwa um die Verbindung mit der faserverstärkten thermoplastischen Deckschicht zu fördern, aus einem geschäumten thermoplastischen Kunststoff. Kostengünstige Polyolefine wie Polypropylen und Polyethylen werden zur Verwendung vorgeschlagen. Die Verwendung von thermoplastischen Kunststoffen hat den Vorteil, dass eine Auf- und Verschmelzung des Schaums mit der Deckschicht erfolgen kann. Dies ist insbesondere im Bereich der Kanten von Bedeutung. Bevorzugt wird in den Kantenbereichen des Sandwichbauteils ein Verschmelzen von Deckschichten und Schaumlage, bzw. deren thermoplastischen Anteilen, durchgeführt, so dass eine Versiegelung der Kanten erreicht wird. Dies wird bspw. durch einen erhöhten Pressdruck in der Heizpresse im Kantenbereich erreicht. Für den Einsatz im Sichtbereich ist es hierbei Vorteilhaft den Kantenabschluss direkt an der Bauteilkontur abzupressen. Hierdurch wird zum einen ein Bauteilbeschnitt erzeugt und zum anderen eine nahezu stumpfe Fügung der äußeren Schichten ermöglicht, wodurch ein qualitativ hochwertiger Bauteilbeschnitt ermöglicht wird. Hierdurch wird ein hochwertiger Beschnitt ermöglicht. Dabei wird ein Sandwichbauteil gebildet, bei dem die Kanten durch Verschmelzung von Deckschicht und Schaumlage versiegelt, beziehungsweise nach außen verschlossen sind. Da Deckschicht und Schaumlage aus thermoplastischen Polymeren bestehen wird durch die Verschmelzung zumindest teilweise eine Polymermischung gebildet.

In bevorzugter Ausgestaltung wird die Deckschicht aus Polypropylen (PP) mit einer Faserverstärkung aus Glasfaservlies gebildet und die Schaumlage aus geschäumtem Polypropylen oder Polyethylentherephthalat (PET).

Als Dekorschicht wird bevorzugt ein Polyester gewählt. Der Polyester der Dekorschicht weist dabei zumindest auf der Oberfläche, bzw. Sichtfläche keine erkennbare Verschmelzung auf. Im Kantenbereich und in den Umformzonen reduziert oder kaschiert die Schaumlage die Abzeichnungen auf der Dekoroberfläche. Hierdurch behält die Dekorfläche auch im Kantenbereich und in den Umformzonen die gleiche optische Anmutung wie auf der restlichen Oberfläche.

Die Versiegelung der Kanten ist besonders vorteilhaft, da hierdurch ein Zutritt von Feuchtigkeit in den Papierwabenkern verhindert wird und eine höhere mechanische Belastung bei einem Kantenaufprall realisiert wird.

Hierbei zeigte sich, dass es auf das Raumgewicht, beziehungsweise die Dichte und die Dicke der Schäume ankommt, um die Oberflächen-Unregelmäßigkeiten zu kaschieren. Bevorzugt liegt das Raumgewicht des Schaums oberhalb 45 kg/m³. Die bevorzugte Dicke liegt oberhalb 1 mm, bevorzugt im Bereich von 1 bis 5 mm. Bei größeren Fehlern oder Unregelmäßigkeiten ist das Raumgewicht sowie die Schaumdicke nach oben anzupassen. Für die beschriebene Bauteilherstellung im Pressverfahren sind Schäume mit hohem Rückstellverhalten, also mit niedrigem Druckverformungsrest zu wählen.

Die Schaumlage kann mit der Deckschicht mittels eines thermoplastischen Materials, das bereits in der Deckschicht oder der Schaumlage oder beiden vorliegt, verbunden sein. Der Verbund der Schaumlage mit der Dekorlage kann mittels des thermoplastischen Materials der Schaumlage erfolgen oder durch eine zusätzliche Kleberschicht erfolgen. Gegebenenfalls kann die Schaumlage auch mit der Deckschicht mittels einer Kleberschicht verbunden sein.

Um den Verbund zwischen der Wabenkernlage und der faserverstärkten thermoplastischen Deckschicht zu verbessern, kann das Sandwichbauteil zwischen der Wabenkernlage und der Deckschicht eine zusätzliche thermoplastische Zwischenschicht aufweisen. Es kann günstig sein, wenn sich die physikalisch-chemischen Eigenschaften wie die Schmelz- bzw. Glasübergangstemperatur der Thermoplasten der Deckschicht ähnlich sind oder entsprechen.

Ferner kann die Wabenkernlage kostengünstig aus einem zellulosebasierten Material, bevorzugt aus Papier oder Karton bestehen.

Die Herstellung eines erfindungsgemäßen Sandwichbauteils umfasst, nachdem eine Sandwichanordnung gebildet wurde, die zumindest die Wabenkernlage und beidseitig der Wabenkernlage eine thermoplastische Fasermateriallage zur Bildung der Deckschicht umfasst, das (a) Erwärmen der Sandwichanordnung bis das thermoplastische Material der Fasermateriallage zumindest zu fließen beginnt, wobei ein Sandwichhalbzeug erhalten wird. Sodann werden (b) eine Dekorlage auf zumindest einer Seite des erwärmten Sandwichhalbzeugs und eine Schaumlage zumindest zwischen einer der Dekorlagen, die zur Bildung einer A-Seite des Sandwichbauteils vorgesehen ist, und dem Sandwichhalbzeug angeordnet. Das erwärmte Sandwichhalbzeug wird (c) in eine, gegebenenfalls vorgewärmte, Formpresse, deren Temperatur deutlich unterhalb der Schmelztemperatur der Thermoplastmatrix liegt, überführt und derart in die Formkavität eingelegt, dass die Seite des Sandwichhalbzeugs mit der Schaumlage und der Dekorlage die A-Seite/Sichtseite des Sandwichbauteils ausbildet. Die Schaum- und Dekorlage wird dabei erst in der kalten Werkzeugkavität auf das noch heiße Sandwichalbzeug aufgelegt. Es folgt (d) das Formpressen des erwärmten Sandwichhalbzeugs mit den Schaum- und Dekorlagen zu dem Sandwichbauteil bei gleichzeitiger Abkühlung und damit Konsolidierung des thermoplastischen Materials und Herstellung des Verbunds. Das fertige, zugeschnittene Sandwichbauteil kann dann (e) entformt werden.

Das Herstellungsverfahren ermöglicht durch die Verwendung einer Schaumlage die kostengünstige in-situ Kaschierung des Sandwischbauteils, um die Abzeichnung von Oberflächenfehlern an der Dekorlage zu verhindern.

Das Erwärmen erfolgt vorzugsweise in einem Heizwerkzeug wie insbesondere in einer Heißpresse, so dass der dabei erzeugte Pressdruck ein Anhaften der thermoplastischen Fasermateriallagen an dem Wabenkern bewirkt.

Vorzugsweise wird die Sandwichanordnung bis zu einer Temperatur erhitzt, die in einem Bereich oberhalb der Schmelztemperatur des thermoplastischen Matrixkunststoffs der Deckschicht liegt, so dass dieser zumindest an den Stellen, an denen die Fasermateriallagen auf den Stegen des Wabenkerns aufliegt, unter dem Druck in der Heißpresse anschmilzt. Gegebenenfalls kann auch der gesamte Matrixkunststoff in einen fließfähigen Zustand bzw. Schmelzzustand überführt werden. Üblicherweise liegt dabei die Erwärmungstemperatur des Heizpresswerkzeugs mindestens bei der Schmelztemperatur.

Durch das zumindest teilweise Anschmelzen der thermoplastischen Kunststoffmatrix wird ein guter Verbund zwischen Wabenkern und Deckschicht erreicht, indem die Endkanten der Wabenstege von dem thermoplastischen Matrixmaterial der Deckschicht aufgenommen werden.

Je nach Art des Verbunds zwischen der Schaumlage und der Deckschicht bzw. der Schaumlage und der Dekorlage kann das Verfahren in (b) das Anordnen einer Kleberschicht zwischen der Schaumlage und der Dekorlage umfassen. Die Schaumlage kann aber auch vorab auf die Dekorlage laminiert werden, so dass hier ein Schaum-Dekor-Laminat zur Anordnung auf dem aufgeheizten Sandwichhalbzeug vorliegt. Gegebenenfalls kann auch eine Kleberschicht zwischen der Schaumlage und der Deckschicht vorgesehen sein, allerdings kann der Verbund zwischen der Schaumlage und der Deckschicht vorzugsweise durch den Matrixthermoplasten der Deckschicht des aufgeheizten Sandwichhalbzeugs bereitgestellt werden. Ferner kann vorgesehen sein, dass die Schaumlage vor (b) bis zur Erweichung des thermoplastischen Materials der Schaumlage erwärmt wird, so dass das thermoplastische Material der Schaumlage haftend wird und den Verbund mit der Dekorlage und der Deckschicht ausbilden kann.

Ist eine thermoplastische Zwischenschicht im Sandwichaufbau vorgesehen, so erfolgt vor Schritt a) das Anordnen der thermoplastischen Zwischenlage, bei der es sich bevorzugt um eine Thermoplastfolie handeln kann, zwischen die Wabenkernlage und die die Deckschicht bildende thermoplastischer Fasermateriallage.

Auch hierbei wird durch das zumindest teilweise Anschmelzen der thermoplastischen Kunststoffmatrix ein guter Verbund zwischen Wabenkern und Deckschicht erreicht, wobei hier nun die Endkanten der Wabenstege von dem thermoplastischen Matrixmaterial der Zwischenschicht aufgenommen werden, die die Verbindung zwischen Wabenkern und Deckschicht vermittelt und gleichzeitig das Eindringen von Fasermaterial in die Wabenhohlräume und damit die Verringerung des Faseranteil in der Deckschicht verhindert.

Wenn eine Wabenkernlage aus einem zellulosebasierten Material, beispielsweise Papier, eingesetzt wird, kann ferner vorgesehen sein, dass, insbesondere wenn höhere Umformgrade bei der Formgebung zum Sandwichbauteil vorliegen, die Wabenkernlage entsprechend der Bauteilform unter Druck- und Temperatureinwirkung vor (a) vorgeformt wird, nachdem sie befeuchtet wurde, um die Umformbarkeit des zellulosebasierten Materials zu verbessern.

Das Befeuchten kann vorzugsweise mit Wasser durch Besprühen oder Bedampfen erfolgen, während das Vorformen in einem Presswerkzeug unter Druckausübung und Wärmeeinwirkung (in einem Bereich von 40 °C bis 200 °C) stattfinden kann. Nach Bildung der Sandwichanordnung des vorgeformten Wabenkerns mit den Fasermateriallagen (und gegebenenfalls thermoplastischen Zwischenlagen) folgen dann die erfindungsgemäßen Verfahrensschritte.

Diese und weitere Vorteile werden durch die nachfolgende Beschreibung unter Bezug auf die begleitenden Figuren dargelegt.

Der Bezug auf die Figuren in der Beschreibung dient der Unterstützung der Beschreibung und dem erleichterten Verständnis des Gegenstands. Die Figuren sind lediglich eine schematische Darstellung einer Ausführungsform der Erfindung.

Dabei zeigen:
- Fig. 1: eine in schematischen Schnittansichten der Werkzeuge dargestellte Schrittfolge a) bis e) des Verfahrens,
- Fig. 2: eine Abbildung einer Schnittansicht eines erfindungsgemäßen Sandwichbauteils.

Ein erfindungsgemäßes Sandwichbauteil umfasst neben dem Wabenkern und den faserverstärkten thermoplastischen Deckschichten zumindest eine Dekorlage auf der Sichtseite des Bauteils, wobei durch den Einsatz einer Schaumlage als Zwischenlage zwischen der Dekorlage (bei der es sich z. B. um eine Textilware handeln kann) und der Sandwichdeckschicht zur Kaschierung von Oberflächenfehlern.

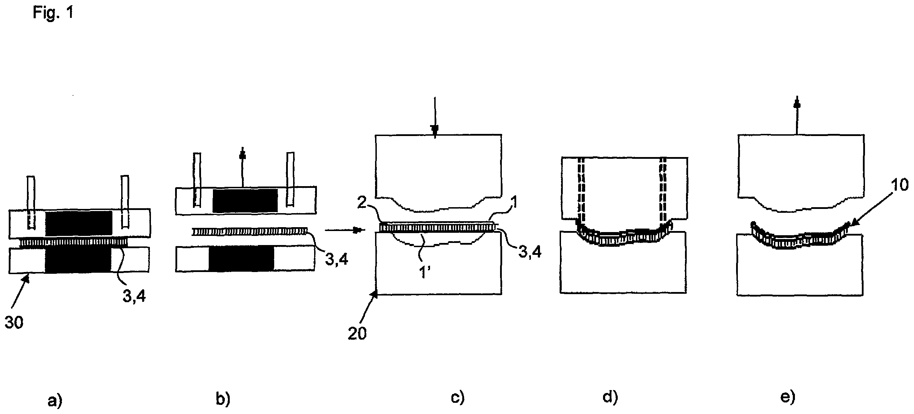

Als kostengünstiger Herstellungsprozess hat sich eine in-situ Kaschierung im formgebenden Presswerkzeug 20 erwiesen. Die Herstellung des Sandwichbauteils 10 ist in Fig. 1 schematisch dargestellt.

In Schritt a) wird eine Mehrlagenanordnung aus faserverstärkten Thermoplastlagen 3 zur Bildung der Deckschichten und der dazwischen angeordneten Wabenkernlage 4 in einem Heizwerkzeug 30, z. B. einer Heißpresse erhitzt. Als faserverstärkte Thermoplastlagen 3 kommen z. B. Organobleche oder Hybridtextilien aus Verstärkungs- und Matrixfasern in Frage, als Wabenkernlage 4 können aus Kosten- und Gewichtsgründen zellulosebasierte Wabenkerne 4 bevorzugt werden. Die Bezeichnung "Wabe" soll die Struktur des Wabenkerns nicht beschränkend bezeichnen, sondern meint eine aus Stegen aufgebaute Struktur mit geringer Dichte und hoher Steifigkeit. Geeignete Wabenkernstrukturen umfassen die hexagonalen typischen "Bienenwabenstrukturen" genauso wie wellenförmige, kreisförmige, rauten- oder rechteckförmige Faltstrukturen, sowie unregelmäßig gestaltete, "organisch" anmutende Strukturen. Als zellulosebasiertes Material für den Wabenkern kommt unter anderem Papier und Karton in Frage.

Die Verstärkungsfasern der faserverstärkten Thermoplastlagen 3 zur Bildung der Deckschicht können in Form von Vlies, Wirrvlies oder Fasermatten mit gerichteten Fasern, Geweben, Gestricken, Gelegen, sowohl unidirektional als auch mehrdirektional vorliegen. Die Verstärkungsfasern können plattenförmig in einer Thermoplastmatrix vorkonsolidiert sein, bei dieser Halbzeugart spricht man auch von Organoblechen. Ferner ist auch die Verwendung eines Hybridgarns oder Hybridtextils denkbar, so dass ein Faserhalbzeug verwendet wird, das thermoplastische Fasern enthält, die die Matrix bilden, sowie Verstärkungsfasern. Bei den Verstärkungsfasern handelt es sich dabei um Naturfasern, Glasfasern, Carbonfasern, Polymer-, insbesondere Aramidfasern, es können aber auch Kombinationen verschiedener Fasern verwendet werden.

Die Mehrlagenanordnung kann ferner eine Thermoplastfolie als Zwischenlage zwischen den faserverstärkten Thermoplastlagen 3 und dem Wabenkern 4 zur Verbesserung der Deckschichtanbindung umfassen. Besonders geeignet sind hierbei Folien aus Thermoplasten, deren Schmelzeigenschaften jenen des thermoplastischen Matrixmaterials der Deckschicht entsprechen, so dass sich die Zwischenschicht gleichzeitig mit der Deckschicht verbindet und die Anbindung an die Wabenkernlage schafft. Der Folienthermoplast und die Thermoplastmatrix der Deckschicht können das gleiche thermoplastische Material sein. Es kommen Thermoplasten wie beispielsweise Polyamide, Acrylnitril-Butadien-Styrol, Polypropylen oder andere Polyolefine in Frage.

Im Heizwerkzeug 30 erfolgt eine Beaufschlagung mit Temperatur, die von der Art des oder der verwendeten Thermoplasten abhängig ist und bei der dieser zumindest erweicht, bevorzugt angeschmolzen wird, so dass die deckschichtbildenden Faserlagen 3 mittels des Matrixthermoplasten oder des Thermoplasten der Zwischenschicht an dem Wabenkern 4 haften.

Das so erzeugte und noch erhitzte Sandwichhalbzeug aus Wabenkern 4 und Deckschichten 3 (und gegebenenfalls den dazwischen liegenden Thermoplastfolien) kann nach Öffnen des Heizwerkzeugs 30 in Schritt b) entnommen und in das formgebende Pressenwerkzeug 20 überführt werden, wobei die Anordnung der Dekorlagen 1,1' auf den entsprechenden Seiten des aufgeheizten Sandwichhalbzeugs 3,4 in Bezug zu der Bauteilform erfolgt (Schritt c). Gegebenenfalls kann vorgesehen sein, nur die Sichtseite (A-Seite) des Bauteils mit einer Dekorlage 1 zu kaschieren.

Zur Vermeidung von Abzeichnungen wird zumindest zwischen der die Sichtseite des Bauteils bildenden Dekorlage 1 und der Deckschicht 3 eine Schaumlage 2 integriert, um eine gute Oberflächenqualität der A-Seite zu erhalten. Diese Schaumlage 2 kann bereits mit der Dekorlage 1 laminiert sein. Die Schaumlage 2 kann aber auch separat zugeführt werden. So erfolgt bei der Überführung des aufgeheizten Sandwichhalbzeugs 3,4 zunächst die Anordnung der Schaumlage(n), ehe die Dekorlage(n) aufgelegt werden.

Die Schaumlage 2 haftet durch den infolge der Erwärmung fließfähigen Matrixkunststoff an der Deckschicht 3. Zur Verbindung mit der Dekorlage 1 kann die Schaumlage 2, die aus einem geschäumten Thermoplasten bestehen kann, ebenfalls erwärmt werden. Dies kann gegebenenfalls zusammen mit dem Sandwichhalbzeug 3,4 oder separat erfolgen, um nicht nur die stoffliche Verbindung zur thermoplastischen Matrix der Deckschicht 3 sondern auch zur Dekorlage 1 zu ermöglichen. Allerdings sollte dabei die Schaumlage lediglich erweichen und adhäsiv werden, nicht aber schmelzen, um nicht die Schaumstruktur zu verlieren. Alternativ kann die Schaumlage 2 durch eine zusätzliche Klebeschicht insbesondere mit der Dekorlage 1, gegebenenfalls aber auch mit der Deckschicht 3 verbunden werden. In diesem Fall können auch andere Materialien als Thermoplasten für die Schaumlage verwendet werden.

Für eine Schaumlage 2 aus einem Thermoplasten kann entsprechend der thermoplastischen Zwischenfolie ein Thermoplast gewählt werden, dessen Schmelzeigenschaften jenen des thermoplastischen Matrixmaterials der Deckschicht entsprechen, so dass sich die Schaumlage bei Erwärmung mit der Deckschicht verbinden kann. So kann auch die Schaumlage aus einem Thermoplasten wie Polyamide, Acrylnitril-Butadien-Styrol, Polypropylen, Polyethylen oder andere Polyolefine gefertigt werden. Der Thermoplast zur Bildung der Schaumlage kann auch hinsichtlich seiner Schmelzeigenschaften so gewählt werden, dass er im Vergleich zu dem Thermoplasten der Deckschicht eine höhere Schmelz- bzw. Glasübergangstemperatur aufweist, um zu vermeiden, dass die Schaumlage in Kontakt mit dem aufgeheizten Sandwichhalbzeug ihre Schaumstruktur verliert.

Das Pressenwerkzeug 20 hat eine Temperatur deutlich unterhalb der Schmelztemperatur der thermoplastischen Deckschicht, so dass beim Schließen des Werkzeugs 20 nicht nur die Formgebung zu dem Bauteil 10 stattfindet, sondern gleichzeitig durch das Abkühlen des Thermoplastmaterials die Verbundherstellung zwischen den Materiallagen erfolgt (Schritt d). Durch die Schaumlage 2 wird ermöglicht, die insbesondere in den umzuformenden Bereichen entstehenden Fehlstellen zu kaschieren, die durch die Umformung des Wabenkerns 4 bedingt sind. So können beispielsweise Abzeichnungen, entstanden durch Zellwandrisse des Wabenkerns, auf der Oberfläche kaschiert werden. Nach Öffnen des Pressenwerkzeugs 20 kann das fertige Bauteil 10 entformt werden.

Mit der Schaumlage 2 als Zwischenlage wird die Herstellung des Sandwichbauteils 10 mit kostengünstiger in-situ Kaschierung ermöglicht.

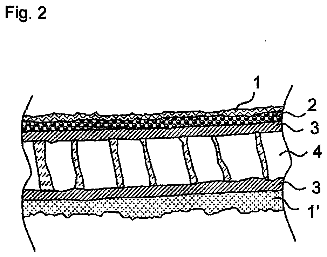

Fig. 2 zeigt den Sandwichaufbau in einer fotografischen Abbildung eines Schnitts durch ein erfindungsgemäß aufgebautes Sandwichmaterial. Die Sichtseite des Bauteils (A-Seite) wird hier durch eine textile Dekorware 1 gebildet, unter der die kaschierende Schaumlage 2 vorliegt, die durch ein thermoplastisches Faservlies der Deckschicht 3, hier Glasfasern in Polypropylen, von der Papierwabe 4 getrennt ist. Auf der Unterseite des Bauteils 10 sind an der Papierwabe 4 ein thermoplastisches Faservlies als Deckschicht 3 und eine textile Dekorware 1', die die B-Seite bildet, angeordnet. Hier liegt zwischen der Deckschicht 3 und der B-Seiten Dekorlage 1' keine Schaumlage vor; generell ist es aber möglich, beide Seiten des Sandwichs mit einer kaschierenden Schaumlage unter der Dekorlage zu versehen.

## Patentansprüche

1. Sandwichbauteil (10) mit zwei faserverstärkten thermoplastischen Deckschichten (3) und einer dazwischen angeordneten Wabenkernlage (4), wobei die Deckschichten mittels eines thermoplastischen Materials mit der Wabenkernlage (4) verbunden ist, und wobei zumindest eine Seite des Sandwichbauteils (10) eine Dekorlage (1,1') aufweist, die auf der Deckschicht (3) angeordnet ist, wobei das Sandwichbauteil (10) ferner zumindest eine Schaumlage (2) umfasst, die zwischen der Deckschicht (3) und der Dekorlage (1,1') angeordnet ist, wobei die Schaumlage (2) mit der Deckschicht (3) und der Dekorlage (1,1') verbunden ist, wobei die Kanten des Sandwichbauteils (10) versiegelt, beziehungsweise nach außen verschlossen sind, **dadurch gekennzeichnet, dass** die Schaumlage (2) aus einem geschäumten thermoplastischen Kunststoff besteht.

2. Sandwichbauteil (10) nach Anspruch 1 ,
**dadurch gekennzeichnet, dass**
die Schaumlage (2) mit der Deckschicht (3) und/oder der Dekorlage (1,1') mittels des thermoplastischen Materials, das in der Deckschicht (3) und/oder der Schaumlage (2) vorliegt, verbunden ist, und/oder dass die Schaumlage (2) mit der Deckschicht (3) und/oder der Dekorlage (1,1') durch eine Kleberschicht verbunden ist.

3. Sandwichbauteil (10) nach zumindest einem der Ansprüche 1 bis 2,
**dadurch gekennzeichnet, dass**
die Wabenkernlage (4) aus einem zellulosebasierten Material, bevorzugt aus Papier oder Karton besteht.

4. Verfahren zur Herstellung eines Sandwichbauteils (10) nach zumindest einem der Ansprüche 1 bis 3,
umfassend die Schritte:
a) Erwärmen einer Sandwichanordnung, die zumindest die Wabenkernlage (4) und zwei thermoplastische Fasermateriallagen zur Bildung der Deckschichten (3) umfasst, bis das thermoplastische Material der Fasermateriallagen (3) zumindest zu fließen beginnt, dabei Erhalten eines Sandwichhalbzeugs,
b) Anordnen einer Dekorlage (1,1') auf zumindest einer Seite des erwärmten Sandwichhalbzeugs, und Anordnen einer thermoplastischen Schaumlage (2) zumindest zwischen einer der Dekorlagen (1,1'), die zur Bildung einer A-Seite/Sichtseite des Sandwichbauteils (10) vorgesehen ist, und dem Sandwichhalbzeug,
c) Überführen des erwärmten Sandwichhalbzeugs mit der zumindest einen Schaumlage (2) und der zumindest einen Dekorlage (1,1') in eine unbeheizte Formpresse (20), und derart in die Formkavität Einlegen, dass die Seite des Sandwichhalbzeugs mit der Schaumlage (2) und der Dekorlage (1,1') die A-Seite/Sichtseite des Sandwichbauteils (10) ausbildet,
d) Formpressen des erwärmten Sandwichhalbzeugs mit der zumindest einen Schaumlage (2) und der zumindest einen Dekorlage (1,1') zu dem Sandwichbauteil (10), dabei gleichzeitig Abkühlen und Ausbilden eines Verbunds zwischen den Materiallagen des Sandwichbauteils (10),
e) Enformen des Sandwichbauteils (10).

5. Verfahren nach Anspruch 4,
wobei das Erwärmen in einem Heizwerkzeug (30), bevorzugt in einer Heißpresse (30) erfolgt.

6. Verfahren nach Anspruch 4 oder 5,
umfassend den Schritt:
in Schritt b) Anordnen einer Kleberschicht zwischen der Schaumlage (2) und der Dekorlage (1) und/oder der Deckschicht (3) oder
vor Schritt b) Laminieren der Schaumlage (2) auf die Dekorlage (1), oder Erwärmen der Schaumlage (2) bis zur Erweichung des thermoplastischen Materials der Schaumlage (2), so dass das thermoplastische Material der Schaumlage (2) haftend wird.

7. Verfahren nach zumindest einem der Ansprüche 4 bis 6,
umfassend den Schritt:
vor Schritt a) Anordnen einer thermoplastischen Zwischenlage, bevorzugt einer Thermoplastfolie, zwischen die Wabenkernlage (4) und die thermoplastische Fasermateriallage (3).

8. Verfahren nach zumindest einem der Ansprüche 4 bis 7,
umfassend den Schritt
vor Schritt a) Befeuchten der Wabenkernlage (4) aus einem zellulosebasierten Material und Vorformen der Wabenkernlage (4) unter Druck- und Temperatureinwirkung entsprechend der Bauteilform.

9. Verfahren nach zumindest einem der Ansprüche 4 bis 8,
**dadurch gekennzeichnet, dass**
die Schaumlage (2) bei der Erwärmung bis zur Erweichung des thermoplastischen Materials in den Kantenbereichen des Sandwichbauteils zu einem Verschmelzen mit den Deckschichten und zu einer Versiegelung der Kanten führt.

## Claims

1. Sandwich component (10) with two fibre-reinforced thermoplastic cover layers (3) and a honeycomb core layer (4) placed in between, wherein the cover layers are joined to the honeycomb core layer (4) by means of a thermoplastic material and wherein at least one side of the sandwich component (10) has a decorative layer (1, 1') located on the cover layer (3), wherein the sandwich component (10) further comprises a foam layer (2) located between the cover layer (3) and the decorative layer (1, 1'), wherein the foam layer (2) is joined to the cover layer (3) and the decorative layer (1, 1'), wherein the edges of the sandwich component (10) are sealed or closed against the outside,
**characterised in that**
the foam layer (2) consists of a foamed thermoplastic plastic material.

2. Sandwich component (10) according to claim 1,
**characterised in that**
the foam layer (2) is joined to the cover layer (3) and/or the decorative layer (1, 1') by means of the thermoplastic material present in the cover layer (3) and/or the foam layer (2), and/or **in that** the foam layer (2) is joined to the cover layer (3) and/or the decorative layer (1, 1') by an adhesive layer.

3. Sandwich component (10) according to one or more of claims 1 to 2,
**characterised in that**
the honeycomb core layer (4) consists of a cellulose-based material, preferably of paper or cardboard.

4. Method for producing a sandwich component (10) according to one or more of claims 1 to 3,
comprising the steps of:
a) heating a sandwich assembly comprising at least the honeycomb core layer (4) and two thermoplastic fibre material layers for forming the cover layers (3) until the thermoplastic material of the fibre material layers (3) begins to flow at least, while obtaining a semi-finished sandwich product,
b) placing a decorative layer (1, 1') on at least one side of the heated semi-finished sandwich product and placing a thermoplastic foam layer (2) at least between a decorative layer (1, 1') provided to form an A-side / visible side of the sandwich component (10) and the semi-finished sandwich product.
c) transferring the heated semi-finished sandwich product with the at least one foam layer (2) and the at least one decorative layer (1, 1') to an unheated mould (20), placing it in the mould cavity in such a way that the side of the semi-finished sandwich product with the foam layer (2) and the decorative layer (1, 1') forms the A-side / visible side of the sandwich component (10),
d) compression-moulding the heated semi-finished sandwich product with the at least one foam layer (2) and the at least one decorative layer (1, 1') to form the sandwich component (10) while cooling and forming a bond between the material layers of the sandwich component (10),
e) demoulding the sandwich component (10).

5. Method according to claim 4,
wherein the heating is carried out in a heating tool (30), preferably in a hot press (30).

6. Method according to claim 4 or 5,
comprising the step of:
in step b) placing an adhesive layer between the foam layer (2) and the decorative layer (1) and/or the cover layer (3), or
before step b) laminating the foam layer (2) onto the decorative layer (1) or heating the foam layer (2) until the thermoplastic material of the foam layer (2) is softened, so that the thermoplastic material of the foam layer (2) becomes adhesive.

7. Method according to one or more of claims 4 to 6,
comprising the step of:
before step a) placing a thermoplastic intermediate layer, preferably a thermoplastic film, between the honeycomb core layer (4) and the thermoplastic fibre material layer (3).

8. Method according to one or more of claims 4 to 7,
comprising the step of:
before step a) wetting the honeycomb core layer (4) made of a cellulose-based material and pre-shaping the honeycomb core layer (4) under the influence of pressure and temperature in accordance with the shape of the component.

9. Method according to one or more of claims 4 to 8,
**characterised in that**
when heated until the thermoplastic material is softened, the foam layer (2) results in the edge regions of the sandwich component in a fusion with the cover layers and in a sealing of the edges.

## Revendications

1. Pièce structurale sandwich (10) comprenant deux couches de recouvrement (3) thermoplastiques renforcées par des fibres et une couche centrale en nid d'abeilles (4) disposée entre les deux, les couches de recouvrement étant reliées au moyen d'un matériau thermoplastique à la couche centrale en nid d'abeilles (4), et au moins une face de la pièce structurale sandwich (10) présentant une couche décorative (1, 1') qui est disposée sur la couche de recouvrement (3), la pièce structurale sandwich (10) comprenant en outre au moins une couche de mousse (2), qui est disposée entre la couche de recouvrement (3) et la couche décorative (1, 1'), la couche de mousse (2) étant reliée à la couche de recouvrement (3) et à la couche décorative (1, 1'), les bords de la pièce structurale sandwich (10) étant scellés, ou bien étant fermés vers l'extérieur, **caractérisée en ce que** la couche de mousse (2) est constituée d'un plastique thermoplastique expansé.

2. Pièce structurale sandwich (10) selon la revendication 1, **caractérisée en ce que** la couche de mousse (2) est reliée à la couche de recouvrement (3) et/ou à la couche décorative (1, 1') au moyen du matériau thermoplastique qui est présent dans la couche de recouvrement (3) et/ou la couche de mousse (2), et/ou **en ce que** la couche de mousse (2) est reliée à la couche de recouvrement (3) et/ou à la couche décorative (1, 1 ') par une couche adhésive.

3. Pièce structurale sandwich (10) selon au moins l'une des revendications 1 à 2, **caractérisée en ce que** la couche centrale en nid d'abeilles (4) est constituée d'un matériau à base de cellulose, de préférence de papier ou de carton.

4. Procédé de fabrication d'une pièce structurale sandwich (10) selon au moins l'une des revendications 1 à 3,
comprenant les étapes consistant à :
a) chauffer un ensemble sandwich, qui comprend au moins la couche centrale en nid d'abeilles (4) et deux couches de matériaux en fibres thermoplastiques pour former les couches de recouvrement (3), jusqu'à ce que le matériau thermoplastique des couches en matériau de fibres (3) commence au moins à s'écouler, produisant ainsi un semi-produit sandwich,
b) disposer une couche décorative (1, 1') sur au moins une face du semi-produit sandwich chauffé, et disposer une couche de mousse thermoplastique (2) au moins entre une des couches décoratives (1, 1') qui sert à former une face A/face visible de la pièce structurale sandwich (10), et le semi-produit sandwich,
c) transférer le semi-produit sandwich chauffé avec ladite couche de mousse (2) et ladite couche décorative (1, 1') dans un moule par compression (20) et l'insérer dans la cavité de moule de telle sorte que la face du semi-produit sandwich avec la couche de mousse (2) et la couche décorative (1, 1') forme la face A/face visible de la partie structurale sandwich (10),
d) mouler par compression le semi-produit sandwich chauffé avec ladite couche de mousse (2) et ladite couche décorative (1, 1') pour en faire une pièce structurale sandwich (10), en même temps refroidir et former un composite entre les couches de matériau de la pièce structurale sandwich (10),
e) démouler la pièce structurale sandwich (10).

5. Procédé selon la revendication 4, le chauffage s'effectuant dans l'outil de chauffage (30), de préférence dans la presse à chaud (30).

6. Procédé selon la revendication 4 ou 5, comprenant l'étape consistant à :
dans l'étape b) disposer une couche adhésive entre la couche de mousse (2) et la couche décorative (1) et/ou la couche de recouvrement (3) ou
avant l'étape b) stratifier la couche de mousse (2) sur la couche décorative (1) ou chauffer la couche de mousse (2) jusqu'à ramollissement du matériau thermoplastique de la couche de mousse (2) de sorte que le matériau thermoplastique de la couche de mousse (2) devienne collant.

7. Procédé selon l'une quelconque des revendications 4 à 6, comprenant l'étape consistant à :
avant l'étape a) disposer une couche intermédiaire thermoplastique, de préférence une feuille thermoplastique, entre la couche centrale en nid d'abeilles (4) et la couche de matériau de fibres thermoplastique (3).

8. Procédé selon l'une quelconque des revendications 4 à 7, comprenant l'étape consistant à :
avant l'étape a) humidifier la couche centrale en nid d'abeilles (4) en matériau à base de cellulose et préformer la couche centrale en nid d'abeilles (4) sous l'effet de la température et de la pression conformément à la forme de la pièce structurale.

9. Procédé selon l'une quelconque des revendications 4 à 8, **caractérisé en ce que** la couche de mousse (2) lors du chauffage jusqu'au ramollissement du matériau thermoplastique dans les zones cornières de la pièce structurale sandwich entraîne une fusion avec les couches de recouvrement et à un scellage des bords.
